## Europäisches Patentamt
## European Patent Office
## Office européen des brevets

(19)

(11) Veröffentlichungsnummer: **0 101 610**
**B1**

(12)                 # EUROPÄISCHE PATENTSCHRIFT

(45) Veröffentlichungstag der Patentschrift:
08.04.87

(51) Int. Cl.⁴: **H 04 B 1/58**

(21) Anmeldenummer: **83108141.9**

(22) Anmeldetag: **17.08.83**

(54) **Aktive Gabelschaltung mit geringer Verlustleistung.**

(30) Priorität: **19.08.82 DE 3230886**

(43) Veröffentlichungstag der Anmeldung:
**29.02.84 Patentblatt 84/9**

(45) Bekanntmachung des Hinweises auf die Patenterteilung:
**08.04.87 Patentblatt 87/15**

(84) Benannte Vertragsstaaten:
**AT CH DE FR GB IT LI**

(56) Entgegenhaltungen:
**DE-A-2 818 432**
**FR-A-1 573 659**
**GB-A-1 131 947**
**US-A-3 480 742**
**US-A-4 103 118**

(73) Patentinhaber: **Siemens Aktiengesellschaft Berlin und München, Wittelsbacherplatz 2, D-8000 München 2 (DE)**

(72) Erfinder: **Stummer, Baldur, Dipl.- Ing., Wilhelm-Kuhnert- Strasse 21, D-8000 München 90 (DE)**
Erfinder: **Sontheim, Hans, Ing.grad., Alpspitzstrasse 14, D-8133 Feldafing (DE)**
Erfinder: **Müller, Eugen, Dr. Ing., Birgweg 8, D-8021 Hohenschäftlarn (DE)**

EP 0 101 610 B1

## Beschreibung

Die Erfindung betrifft eine aktive Gabelschaltung mit einem Übertrager, der eine erste Wicklung und zwei weitere in Serie geschaltete Wicklungen aufweist.

Gabelschaltungen sind bei der Duplexübertragung über ein einziges Leiterpaar aus der Fernsprech- und Datenübertragungstechnik bekannt. Sie werden zur Richtungstrennung von abgehenden und ankommenden Signalen verwendet (z.B. DE-A- 2 818 432).

Die üblichen Gabelschaltungen sind mit Hilfe eines Transformators aufgebaut. Durch eine Art Brückenschaltung, die mit Hilfe einer Mittelanzapfung einer Wicklungsseite und einer der Signalfernleitung angepaßten elektrischen Nachbildung realisiert ist, wird verhindert, daß die ausgesendeten Signale zum eigenen Empfänger gelangen. Da sich die ausgesendete Signalleistung auf den Innenwiderstand der Signalquelle und zwei annähernd gleich große Widerstände, die Signalfernleitung und die Nachbildung verteilt, wird nur 25 % der Signalleistung an die Signalfernleitung abgegeben.

Aufgabe der Erfindung ist es, eine Gabelschaltung mit hohem Wirkungsgrad anzugeben.

Diese Aufgabe wird dadurch gelöst, daß an die erste Wicklung die Signalfernleitung angeschlossen ist, daß der Verbindungspunkt der in Serie geschalteten Wicklungen mit dem invertierenden Eingang eines Operationsverstärkers verbunden ist, daß der Ausgang des Operationsverstärkers an das freie Ende der dritten Wicklung angeschlossen ist, daß die Einspeisung der Sendesignalspannung über einen geeigneten Innenwiderstand am Anfang der zweiten Wicklung erfolgt, und daß eine Empfangsschaltung zur Gewinnung des Empfangssignals an eine der in Serie geschalteten Wicklungen angeschlossen ist.

Durch die aktive Gabelschaltung kann der Wirkungsgrad auf nahezu 100 % heraufgesetzt werden. Durch die geringe Verlustleistung ist eine kompakte Bauweise möglich.

Es ist vorteilhaft, daß der Ausgang eines gegengekoppelten zweiten Operationsverstärkers an den Anfang der zweiten Wicklung angeschlossen ist, daß zwischen dem Ende der zweiten Wicklung und dem Anfang der dritten Wicklung ein Meßwiderstand eingeschaltet ist und daß ein Rückkopplungswiderstand zur Einstellung des Innenwiderstandes vom Ende der zweiten Wicklung auf den invertierenden Eingang des zweiten Operationsverstärkers geschaltet ist.

Bei dieser Schaltungsanordnung wird der Einspeisewiderstand durch Rückkopplung des zweiten Operationsverstärkers eingestellt. Verluste entstehen nur am Meßwiderstand $R_K$. Bei dieser Schaltungsanordnung erhält man bei einem hohen Wirkungsgrad auch eine große Amplitude des empfangenen Signals am Ausgang des ersten Operationsverstärkers.

Es ist besonders vorteilhaft, daß als Empfangsschaltung ein dritter Operationsverstärker vorgesehen ist, der als Additionsschaltung mit einem Gegenkopplungswiderstand und zwei Eingangsimpedanzen ausgeführt ist.

Es ist ferner günstig, daß einem ersten Eingang der Additionsschaltung die Sendesignalspannung zugeführt ist und daß an einen zweiten Eingang der Additionsschaltung der Ausgang der dritten Wicklung angeschlossen ist.

Als Empfangsschaltung ist eine Additionsschaltung mit einem Operationsverstärker besonders geeignet. An einem Eingang der Additionsschaltung liegt die Sendesignalspannung an, am anderen liegt die Sendesignalspannung invertiert an. Durch die Eingangsimpedanzen können die Eingangsspannungen der Additionsschaltung auch unterschiedlich bewertet werden, so daß eine optimale Richtungstrennung erfolgt, wenn sich die Anteile der Sendesignalspannungen aufheben. Das Empfangssignal liegt am Ausgang des ersten Operationsverstärkers niederohmig vor, während es am niederohmigen Ausgang des zweiten Operationsverstärkers praktisch fehlt. Es wird deshalb nur das Empfangssignal von der Additionsschaltung abgegeben.

Eine andere Empfangsschaltung ist vorteilhafterweise so aufgebaut, daß als Empfangsschaltung eine Subtraktionsschaltung mit einem dritten Operationsverstärker vorgesehen ist, der einen Gegenkopplungswiderstand und einen an den invertierenden Eingang angeschalteten Einkoppelwiderstand aufweist, sowie einen an den nichtinvertierenden Eingang angeschalteten Spannungsteiler.

Bei dieser Schaltungsanordnung wird die Kompensation des ausgesendeten Signals durch Differenzbildung erzeugt.

Für eine optimale Richtungstrennung ist es vorteilhaft, daß als Eingangsimpedanzen und/oder Spannungsteiler komplexe Widerstände vorgesehen sind.

Eine optimale Richtungstrennung ergibt sich, wenn das Übertragungsverhalten der Signalfernleitung und des Übertragers exakt nachgebildet ist. Hierzu sind Widerstands-/Kondensator-Netzwerke besonders geeignet. Auf die Verwendung von Induktivitäten wird im allgemeinen aus Kostengründen verzichtet.

Weitere vorteilhafte Ausbildungen der Erfindung sind in den übrigen Unteransprüchen angegeben.

Ausführungsbeispiele der Erfindung werden anhand der Fig. 1 bis 6 näher erläutert. Es zeigen:

Fig. 1 ein Ausführungsbeispiel der aktiven Gabelschaltung,

Fig. 2 eine Variante der aktiven Gabelschaltung,

Fig. 3 eine erste Empfangsschaltung

Fig. 4 eine zweite Empfangsschaltung,

Fig. 5 Eingangsimpedanzen für die Empfangsschaltung nach Fig. 3 und

Fig. 6 Bewertungsimpedanzen für die Empfangsschaltung nach Fig. 4.

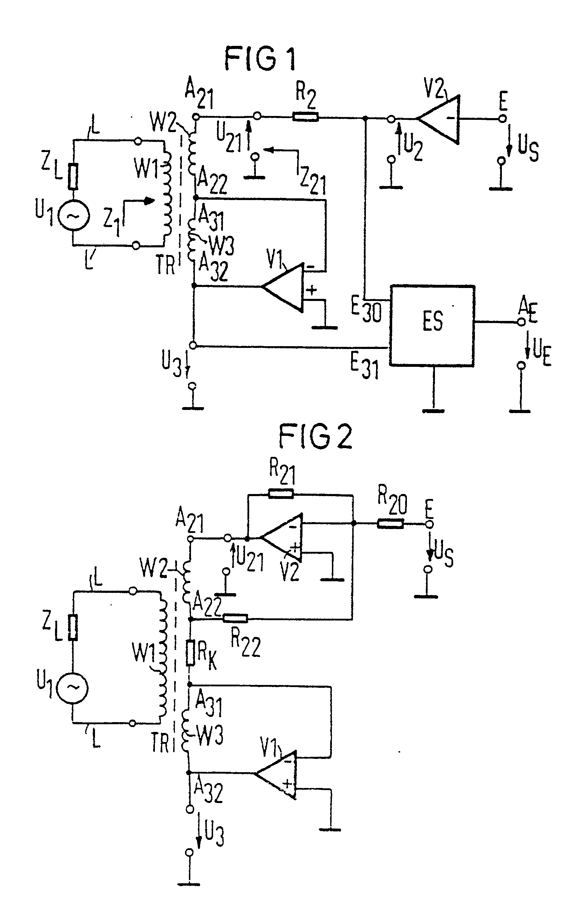

Die in Fig. 1 dargestellte aktive Gabelschaltung enthält einen Transformator TR, an dessen Wicklung W1 eine Signalfernleitung angeschaltet ist. An die Signalfernleitung ist ein Teilnehmer, in allgemeinen über eine weitere Gabelschaltung, angeschaltet, der durch einen Widerstand $Z_L$ in Reihe mit einer Spannungsquelle $U_1$ symbolisiert dargestellt ist. Der Transformator weist zwei weitere Wicklungen W2 und W3 auf, die in Serie geschaltet sind. Der Anfang der Wicklung W2 ist mit $A_{21}$ und das Ende mit $A_{22}$ bezeichnet; der Anfang der dritten Wicklung W3 ist mit $A_{31}$ und das Ende mit $A_{32}$ bezeichnet. Der Verbindungspunkt $A_{22}/A_{31}$ der zweiten mit der dritten Wicklung ist auf den invertierenden Eingang eines ersten Operationsverstärkers V1 geführt, dessen Ausgang mit dem Ende $A_{32}$ der dritten Wicklung verbunden ist.

Der nichtinvertierende Eingang des ersten Operationsverstärkers V1 ist an Masse als Bezugspotential geschaltet. An den Anfang $A_{21}$ der zweiten Wicklung W2 ist der Ausgang eines zweiten Operationsverstärkers V2 über einen Speisewiderstand R2 angeschaltet. Am Eingang E des zweiten Operationsverstärkers wird die auszusendende Signalspannung $U_S$ eingespeist. Die Sendesignalspannung am Ausgang des zweiten Operationsverstärkers ist mit $U_2$ bezeichnet, am Anfang der zweiten Wicklung W2 mit $U_{21}$ und am Ausgang des ersten Operationsverstärkers V1 mit $U_3$.

Eine Empfangsschaltung ES ist mit einem ersten Eingang $E_{30}$ an den Ausgang des zweiten Operationsverstärkers V2 angeschaltet, ihr zweiter Eingang $E_{31}$ der Empfangsschaltung ist mit dem Ausgang des ersten Operationsverstärkers V1 verbunden. Am Ausgang $A_E$ der Empfangsschaltung wird das Empfangssignal $U_E$ abgegeben.

Die Sendesignalspannung $U_2$ soll zum fernen Teilnehmer $Z_L$ übertragen werden. Sie darf hierbei nicht über die Empfangsschaltung ES als Empfangssignal $U_E$ in Erscheinung treten. Sendet jedoch der ferne Teilnehmer ein Signal $U_1$ aus, so wird dieses als Empfangssignal $U_E$ am Ausgang der Empfangsschaltung ES abgegeben. Werden gleichzeitig Signale $U_2$ und $U_1$ ausgesendet, so kommt es zu einer Überlagerung der ausgesendeten mit den empfangenen Signalen, ohne daß dies Auswirkungen auf die Arbeitsweise der Gabelschaltung hat.

Im allgemeinen ist eine Widerstandsanpassung erforderlich. Am Anfang $A_{21}$ der Wicklung W2 beträgt der in die Wicklung gesehene Widerstand

$$Z_{21} = Z_L \cdot \frac{w_2\,(w_2 + w_3)}{(w_1)^2} \quad .$$

Die Spannung $U_1$ wird nach $A_{32}$ im Verhältnis der Windungszahlen $w_1 : w_3$ der Wicklungen W1 und W3 übertragen. Durch den ersten Operationsverstärker V1 wird der Verbindungspunkt $A_{22}/A_{31}$ der zweiten mit der dritten Wicklung auf Bezugspotential, hier Masse, gehalten. Die auf die Wicklung W3 transformierte Spannung $U_1$ kann niederohmig am Ausgang $A_{32}$ des ersten Operationsverstärkers V1 abgenommen werden. Für die auszusendende Signalspannung gelten unter der Annahme $Z_{21} = R_2$ und $Z_L = Z_1$ ($Z_1$ = an W1 wirksamer transformierter Widerstand) folgende Beziehungen:

$$U_{21} = \frac{U_2}{2} \quad ; \quad U_3 = -U_{21}\,\frac{w_3}{w_2} \quad ,$$

wobei $w_1$, $w_2$ und $w_3$ jeweils die Windungszahlen der zugehörigen Wicklungen W1, W2, W3 sind. Mit Hilfe der obigen Beziehungen läßt sich der Wirkungsgrad berechnen:

$$\eta = \frac{1}{1 + \dfrac{w_2}{w_2 + w_3}}$$

Wird das Verhältnis $w_3 : w_2$ groß, so geht der Wirkungsgrad gegen 100 %.
Nachteilig hierbei ist, daß ebenfalls die Spannung

$$U_3 = - \frac{U_2}{2} \frac{w_3}{w_2}$$

sehr groß wird, wodurch bei geringen Betriebsspannungen der lineare Arbeitsbereich des ersten Operationsverstärkers V1 überschritten werden kann.

Der Empfangsschaltung ES wird die Sendesignalspannung $U_2$ und mit der Spannung $U_3$ invertiert ein Vielfaches von $U_2$ sowie ein Vielfaches von $U_1$ zugeführt. Die Empfangsschaltung ist so dimensioniert, daß sich die Komponenten des eigenen Sendesignals aufheben und am Ausgang $A_E$ der Empfangsschaltung nur die übertragene Signalspannung $U_1$ des fernen Teilnehmers anliegt.

In Fig. 2 ist eine Variante der aktiven Gabelschaltung dargestellt, bei der ein hoher Wirkungsgrad auch bei einem kleinen Verhältnis der Windungszahlen der Wicklungen W2 und W3 ermöglicht wird. Bei dieser Variante ist zwischen die Wicklungen W2 und W3 ein Meßwiderstand $R_K$ eingeschaltet. Der zweite Operationsverstärker V2, über den die auszusendende Signalspannung eingespeist wird, ist mit seinem Ausgang direkt an den Anfang $A_{21}$ der zweiten Wicklung W2 angeschlossen. Ein Gegenkopplungswiderstand $R_{21}$ ist vom Ausgang zum invertierenden Eingang des zweiten Operationsverstärkers geschaltet. Die auszusendende Signalspannung $U_S$ gelangt über einen Eingangswiderstand $R_{20}$ auf den invertierenden Eingang von V2. Vom Ausgang $A_{22}$ der zweiten Wicklung W2 ist ein weiterer Rückkopplungswiderstand $R_{22}$ auf den invertierenden Eingang des zweiten Operationsverstärkers geführt. Durch die Dimensionierung der Rückkopplungswiderstände $R_K$, $R_{22}$ und des Gegenkopplungswiderstandes $R_{21}$ wird der Innenwiderstand des beschalteten Operationsverstärkers festgelegt. Will man an den Ausgängen des ersten Operationsverstärkers V1 und des zweiten Operationsverstärkers V2 etwa gleiche Amplituden erhalten, wählt man die Windungszahlen $w_2 = w_3$. Mit der Bedingung

$$Z_L = Z_1 = R_K \left( 1 + \frac{R_{21}}{R_{22}} \right) \frac{w_1^2}{w_2 (w_2 + w_3)}$$

läßt sich der Wirkungsgrad berechnen:

$$\eta = \frac{1}{1 + \dfrac{1}{\left( 1 + \dfrac{w_3}{w_2} \right) \cdot \left( 1 + \dfrac{R_{21}}{R_{22}} \right)}}$$

$Z_1$ gibt den Widerstand an, der am Eingang der Wicklung $W_1$ wirkt.

Für $R_{21} = 5 \times R_{22}$ ergibt sich ein Wirkungsgrad $\eta \approx 95\%$. Die Empfangsschaltung ES ist in Fig. 2 aus Gründen der Übersichtlichkeit nicht eingezeichnet.

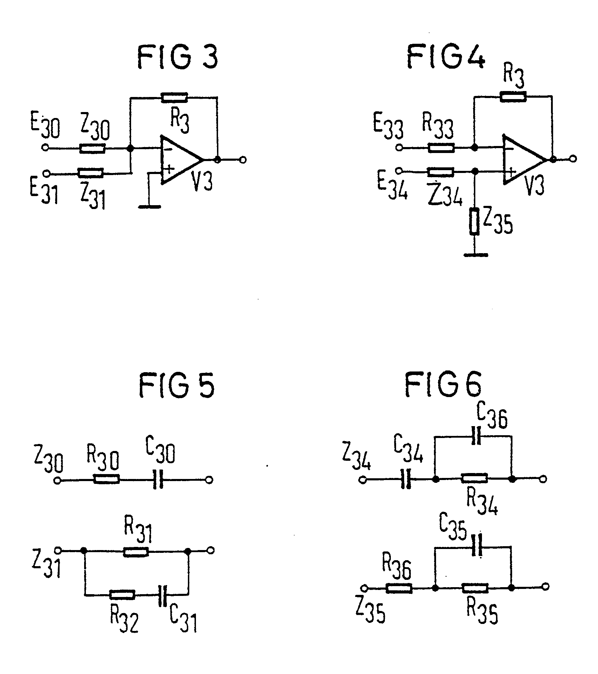

Die Empfangsschaltung ES ist z.B. als invertierende Additionsschaltung AD (Fig. 3) mit einem dritten Operationsverstärker V3 ausgeführt. Dieser ist vom Ausgang auf seinen invertierenden Eingang mit einem Widerstand $R_3$ gegengekoppelt. An den nichtinvertierenden Eingang sind die Eingangsimpedanzen $Z_{30}$ und $Z_{31}$ angeschaltet. Der nichtinvertierende Eingang des Operationsverstärkers liegt auf dem Bezugspotential Masse. Die freien Anschlüsse der Widerstände $Z_{30}$ und $Z_{31}$ bilden die Eingänge $E_{30}$ und $E_{31}$ der Additionsschaltung AD.

Der Additionsschaltung AD wird bei der aktiven Gabelschaltung nach Fig. 1 über die erste Eingangsimpedanz $Z_{30}$ die Spannung $U_2$ zugeführt und über die zweite Eingangsimpedanz $Z_{31}$ die Spannung $U_3$.

Die Additionsschaltung kann entsprechend bei der Variante der aktiven Gabelschaltung nach Fig. 2 angeschaltet werden: $U_S$ an $E_{30}$ und $U_{21}$ an $E_{31}$. Bei dieser Gabelschaltung ist auch die Verwendung anderer Empfangsschaltungen möglich.

Die in Fig. 4 dargestellte Subtraktionsschaltung SB mit zwei Eingängen $E_{33}$ und $E_{34}$ besteht wiederum aus dem dritten Operationsverstärker V3, dem Rückkopplungswiderstand $R_3$ und einem an den invertierenden

4

Eingang als Eingangsimpedanz angeschalteten ohmschen Einkoppelwiderstand $R_{33}$, dessen zweiter Anschluß mit dem Eingang $E_{33}$ verbunden ist. Dieser Eingang ist an den Ausgang des ersten Operationsverstärkers V1 angeschaltet. Der Eingang $E_{34}$ ist über den Spannungsteiler $Z_{34}$ und $Z_{35}$ an den Eingangswiderstand $R_{20}$ des Operationsverstärkers V2 angeschaltet und hierdurch mit dem Eingang E der Gabelschaltung nach Fig. 2 verbunden.

In Fig. 5 ist ein Ausführungsbeispiel der Eingangsimpedanzen $Z_{30}$ und $Z_{31}$ dargestellt. Die Eingangsimpedanz $Z_{30}$ geht aus der Reihenschaltung eines ohmschen Widerstands $R_{30}$ und eines Kondensators $C_{30}$ hervor. Die Eingangsimpedanz $Z_{31}$ besteht aus der Parallelschaltung eines ohmschen Widerstands $R_{31}$ mit der Reihenschaltung eines ohmschen Widerstands $R_{32}$ und eines Kondensators $C_{31}$.

Die in Fig. 6 dargestellte Bewertungsimpedanz $Z_{34}$ des Spannungsteilers enthält die Reihenschaltung eines Kondensators $C_{34}$ mit der Parallelschaltung eines ohmschen Widerstandes $R_{34}$ und eines weiteren Kondensators $C_{36}$. Die Bewertungsimpedanz $Z_{35}$ besteht aus der Parallelschaltung eines ohmschen Widerstandes $R_{35}$ mit einem Kondensator $C_{35}$, die mit einem weiteren ohmschen Widerstand $R_{36}$ in Reihe geschaltet sind. Es sind weitere Varianten der Impedanzen denkbar, die zu einer möglichst vollständigen Richtungstrennung zwischen Empfangssignal und Sendesignal führen.

**Patentansprüche**

1. Aktive Gabelschaltung mit einem Übertrager (TR), der eine erste Wicklung (W1) und zwei weitere in Serie geschaltete Wicklungen (W2, W3) aufweist, dadurch gekennzeichnet, daß an die erste Wicklung (W1) die Signalfernleitung (L) angeschlossen ist, daß der Verbindungspunkt ($A_{22}/A_{31}$) der in Serie geschalteten Wicklungen (W2, W3) mit dem invertierenden Eingang eines Operationsverstärkers (V1) verbunden ist, daß der Ausgang des Operationsverstärkers (V1) an das freie Ende ($A_{32}$) der dritten Wicklung (W3) angeschlossen ist, daß die Einspeisung der Sendesignalspannung ($U_S$) über einen geeigneten Innenwiderstand am Anfang ($A_{21}$) der zweiten Wicklung (W2) erfolgt, und daß eine Empfangsschaltung (ES) zur Gewinnung des Empfangssignals ($U_E$) an eine der in Serie geschalteten Wicklungen (W2, W3) angeschlossen ist.

2. Aktive Gabelschaltung nach Anspruch 1, dadurch gekennzeichnet, daß der Ausgang eines gegengekoppelten zweiten Ocerationsverstärkers (V2) an den Anfang ($A_{21}$) der zweiten Wicklung (W2) angeschlossen ist, daß zwischen dem Ende ($A_{22}$) der zweiten Wicklung (W2) und dem Anfang ($A_{31}$) der dritten Wicklung (W3) ein Meßwiderstand ($R_K$) eingeschaltet ist und daß ein Rückkopplungswiderstand ($R_{22}$) zur Einstellung des Innenwiderstandes vom Ende ($A_{22}$) der zweiten Wicklung (W2) auf den invertierenden Eingang des zweiten Operationsverstärkers (V2) geschaltet ist.

3. Aktive Gabelschaltung nach Anspruch 1 oder 2, dadurch gekennzeichnet, daß als Empfangsschaltung (ES) ein dritter Operationsverstärker (V3) vorgesehen ist, der als Additionsschaltung (AD) mit einem Gegenkopplungswiderstand ($R_3$) und zwei Eingangsimpedanzen ($Z_{30}$, $Z_{31}$) ausgeführt ist.

4. Aktive Gabelschaltung nach Anspruch 3, dadurch gekennzeichnet, daß einem ersten Eingang ($E_{30}$) der Additionsschaltung (AD) die Sendesignalspannung ($U_2$) zugeführt ist und daß an einen zweiten Eingang ($E_{31}$) der Additionsschaltung (AD) der Ausgang ($A_{32}$) der dritten Wicklung (W3) angeschlossen ist.

5. Aktive Gabelschaltung nach Anspruch 2 und Anspruch 3, dadurch gekennzeichnet, daß dem ersten Eingang ($E_{30}$) der Additionsschaltung (AD) die Sendesignalspannung ($U_S$) am Eingang eines mit dem Ausgang an den Anfang ($A_{21}$) der zweiten Wicklung geführten zweiten Operationsverstärkers (V2) zugeführt wird und daß der zweite Eingang ($E_{31}$) der Additionsschaltung (AD) mit dem Anfang ($A_{21}$) der zweiten Wicklung (W2) verbunden ist.

6. Aktive Gabelschaltung nach Anspruch 1 oder Anspruch 2, dadurch gekennzeichnet, daß als Empfangsschaltung (ES) eine Subtraktionsschaltung (SB) mit einem dritten Operationsverstärker (V3) vorgesehen ist, der einen Gegenkopplungswiderstand ($R_3$) und einen an den invertierenden Eingang angeschalteten Einkoppelwiderstand ($R_{33}$) aufweist, sowie einen an den nichtinvertierenden Eingang angeschalteten Spannungsteiler ($Z_{34}$, $Z_{35}$).

7. Aktive Gabelschaltung nach Anspruch 5 oder Anspruch 6, dadurch gekennzeichnet, daß als Eingangsimpedanzen ($Z_{30}$, $Z_{31}$, $R_{33}$) und/oder als Spannungsteiler ($Z_{34}$, $Z_{35}$) komplexe Widerstände vorgesehen sind.

8. Aktive Gabelschaltung nach Anspruch 5 und Anspruch 7, dadurch gekennzeichnet, daß als erste Eingangsimpedanz ($Z_{30}$) die Reihenschaltung eines ohmschen Widerstandes ($R_{30}$) und eines Kondensators ($C_{30}$) vorgesehen ist, und daß als zweite Eingangsimpedanz ($Z_{31}$) die Parallelschaltung eines ohmschen Widerstandes ($R_{31}$) mit der Reihenschaltung eines weiteren ohmschen Widerstandes ($R_{32}$) und eines Kondensators ($C_{31}$) vorgesehen ist.

9. Aktive Gabelschaltung nach Anspruch 6 und Anspruch 7, dadurch gekennzeichnet, daß als erste Bewertungsimpedanz ($Z_{34}$) des Spannungsteilers ($Z_{34}$, $Z_{35}$) eine Reihenschaltung eines Kondensators ($C_{34}$) mit der Parallelschaltung eines ohmschen Widerstandes ($R_{34}$) und eines weiteren Kondensators ($C_{36}$) vorgesehen ist und daß als zweite Bewertungsimpedanz ($Z_{35}$) die Serienschaltung eines ohmschen Widerstandes ($R_{36}$) mit der Parallelschaltung eines weiteren ohmschen Widerstandes ($R_{35}$) und eines Kondensators ($C_{35}$) vorgesehen ist.

10. Aktive Gabelschaltung nach Anspruch 5 oder Anspruch 6, dadurch gekennzeichnet, daß als

Eingangsimpedanz ($Z_{30}$, $Z_{31}$, $R_{33}$) und/oder als Spannungsteiler ($Z_{33}$, $Z_{34}$) ohmsche Widerstände vorgesehen sind.

## Claims

1. An active hybrid circuit comprising a transformer (TR) with a first winding (W1) and two further series-connected windings (W2, W3), <u>characterised in that</u> the signal transmission line (L) is connected to the first winding (W1), that the junction point ($A_{22}/A_{31}$) of the series-connected windings (W2, W3) is connected to the inverting input of an operational amplifier (V1), that the output of the operational amplifier (V1) is connected to the free end ($A_{32}$) of the third winding (W3), that the transmitted signal voltage ($U_S$) is fed to the start ($A_{21}$) of the second winding (W2) via a suitable internal impedance, and that a receiving circuit (ES) which serves to produce the received signal ($U_E$) is connected to one of the series-connected windings (W2, W3).

2. An active hybrid circuit as claimed in Claim 1, <u>characterised in that</u> the output of a second operational amplifier (V2) with negative feedback is connected to the start ($A_{21}$) of the second winding (W2), that a measuring resistor ($R_K$) is connected between the end ($A_{22}$) of the second winding (W2) and the start ($A_{31}$) of the third winding (W3), and that a feedback resistor ($R_{22}$) which serves to set the internal impedance is connected from the end ($A_{31}$) of the second winding (W2) to the inverting input of the second operational amplifier (V2).

3. An active hybrid circuit as claimed in Claim 1 or 2, <u>characterised in that</u> the receiving circuit (ES) consists of a third operational amplifier (V3) formed by an adder circuit (AD) with a negative feedback resistor ($R_3$) and two input impedances ($Z_{30}$, $Z_{31}$).

4. An active hybrid circuit as claimed in Claim 3, <u>characterised in that</u> a first input ($E_{30}$) of the adder circuit (AD) is supplied with the transmitted signal voltage ($U_2$) and that the output ($A_{32}$) of the third winding (W3) is connected to a second input ($E_{31}$) of the adder circuit (AD).

5. An active hybrid circuit as claimed in Claim 2 and 3, <u>characterised in that</u> the first input ($E_{30}$) of the adder circuit (AD) is supplied with the transmitted signal voltage ($U_S$) at the input of a second operational amplifier (V2) whose output leads to the start ($A_{21}$) of the second winding, and that the second input ($E_{31}$) of the adder circuit (AD) is connected to the start ($A_{21}$) of the second winding (W2).

6. An active hybrid circuit as claimed in Claim 1 or 2, <u>characterised in that</u> the receiving circuit (ES) consists of a subtraction circuit (SB) formed by a third operational amplifier (V3) with a negative feedback resistor (R3), an input-coupling resistor ($R_{33}$) connected to the inverting input, and a voltage divider ($Z_{34}$, $z_{35}$) connected to the non-inverting input.

7. An active hybrid circuit as claimed in Claim 5 or 6, <u>characterised in that</u> complex impedances are provided as input impedances ($Z_{30}$, $Z_{31}$, $R_{33}$) and/or as potential dividers ($Z_{34}$, $Z_{35}$).

8. An active hybrid circuit as claimed in Claim 5 and 7, <u>characterised in that</u> the series combination of a resistor ($R_{30}$) and a capacitor ($C_{30}$) is provided as first input impedance ($Z_{30}$) and that the parallel connection of a resistor ($R_{31}$) to the series combination of a further resistor ($R_{32}$) and a capacitor ($C_{31}$) is provided as second input impedance ($Z_{31}$).

9. An active hybrid circuit as claimed in Claim 6 and 7, <u>characterised in that</u> the series combination of a capacitor ($C_{34}$) with the parallel arrangement of a resistor ($R_{34}$) and a further capacitor ($C_{36}$) is provided as first evaluation impedance ($Z_{34}$) of the potential divider ($Z_{34}$, $Z_{35}$) and that the series combination of a resistor ($R_{36}$) with the parallel arrangement of the further resistor ($R_{35}$) and a capacitor ($C_{35}$) is provided as second evaluation impedance ($Z_{35}$).

10. An active hybrid circuit as claimed in Claim 5 or 6, <u>characterised in that</u> resistors are provided as input impedances ($Z_{30}$, $Z_{31}$, $R_{33}$) and/or as potential dividers ($Z_{33}$, $Z_{34}$).

## Revendications

1. Termineur actif comportant un transformateur (TR), qui comprend un premier enroulement (W1) et deux autres enroulements (W2, W3) branchés en série, caractérisé par le fait que la ligne (L) de transmission de signaux à grande distance est raccordée au premier enroulement (W1), que le point de jonction ($A_{22}/A_{31}$) des enroulements (W2, W3) branchés en série est relié à l'entrée inverseuse d'un amplificateur opérationnel (V1), que la sortie de l'amplificateur opérationnel (V1) est raccordée à l'extrémité libre ($A_{32}$) du troisième enroulement (W3), que l'application de la tension ($U_S$) du signal d'émission au début ($A_{21}$) du second enroulement (W2) est réalisée par l'intermédiaire d'une résistance interne appropriée et qu'un circuit de réception (ES) servant à recevoir le signal de réception ($U_E$) est raccordé l'un des enroulements (W2, W3) branchés en série.

2. Termineur actif suivant la revendication 1, caractérisé par le fait que la sortie d'un second amplificateur opérationnel (V2) à contre-réaction est raccordée au début ($A_{21}$) du second enroulement (W2), qu'une résistance de mesure ($R_K$) est branchée entre l'extrémité ($A_{22}$) du second enroulement (W2) et le début ($A_{31}$) du troisième enroulement (W3) et qu'une résistance de réaction ($R_{22}$) servant à régler la résistance interne est branchée entre l'extrémité (A$_{22}$) du second enroulement (W2) et l'entrée inverseuse du second amplificateur opérationnel (V2).

3. Termineur actif suivant la revendication 1 ou 2, caractérisé par le fait qu'il est prévu comme circuit de réception (ES), un troisième amplificateur opérationnel (V3) qui est réalisé sous la forme d'un circuit additionneur (AD) comportant une résistance de contre-réaction (R$_3$) et deux impédances d'entrée (Z$_{30}$, Z$_{31}$).

4. Termineur actif suivant la revendication 3, caractérisé par le fait que la tension (U$_2$) du signal d'émission est envoyée à une première entrée (E$_{30}$) du circuit additionneur (AD) et que la sortie (A$_{32}$) du troisième enroulement (W3) est raccordée à une seconde entrée (E$_{31}$) du circuit additionneur (AD).

5. Termineur actif suivant les revendications 2 et 3, caractérisé par le fait que la tension (U$_S$) du signal d'émission, qui est présente à l'entrée d'un second amplificateur opérationnel (V2), dont la sortie est raccordée au début (A$_{21}$) du second enroulement, est envoyée à la première entrée (E$_{30}$) et que la seconde entrée (E$_{31}$) du circuit additionneur (AD) est reliée au début (A$_{21}$) du second enroulement (W2).

6. Termineur actif suivant la revendication 1 ou 2, caractérisé par le fait qu'il est prévu, comme circuit de réception (ES), un circuit soustracteur (SB) comportant un troisième amplificateur opérationnel (V3), qui possède une résistance de contre-réaction (R$_3$) et une résistance d'injection (R$_{33}$) raccordée à l'entrée inverseuse, ainsi qu'un diviseur de tension (Z$_{34}$, Z$_{35}$) raccordé à l'entrée non inverseuse.

7. Termineur actif suivant la revendication 5 ou 6, caractérisé par le fait qu'il est prévu des résistances complexes en tant qu'impédances d'entrée (Z$_{30}$, Z$_{31}$, R$_{33}$) et/ou en tant que diviseur de tension (Z$_{34}$, Z$_{35}$).

8. Termineur actif suivant les revendications 5 et 7, caractérisé par le fait qu'il est prévu, comme première impédance d'entrée (Z$_{30}$), le circuit série formé d'une résistance ohmique (R$_{30}$) et d'un condensateur (C$_{30}$), et qu'il est prévu, comme seconde impédance d'entrée (Z$_{31}$), deux circuits en parallèle formés d'une résistance ohmique (R$_{31}$) et du circuit série constitué d'une autre résistance ohmique (R$_{32}$) et d'un condensateur (C$_{31}$).

9. Termineur actif suivant les revendications 6 et 7, caractérisé par le fait qu'il est prévu, comme première impédance de pondération (Z$_{34}$) du diviseur de tension (Z$_{34}$, Z$_{35}$), un circuit série formé d'un condensateur (C$_{34}$) et du circuit en parallèle constitué par une résistance ohmique (R$_{34}$) et par un autre condensateur (C$_{36}$) et qu'il est prévu comme seconde impédance de pondération (Z$_{35}$), le circuit série formé d'une résistance ohmique (R$_{36}$) et du circuit en parallèle constitué par une autre résistance ohmique (R$_{35}$) et d'un condensateur (C$_{35}$).

10. Termineur actif suivant la revendication 5 ou 6, caractérisé par le fait qu'il est prévu des résistances ohmiques en tant qu'impédance d'entrée (Z$_{30}$, Z$_{31}$ et R$_{33}$) et/ou en tant que diviseur de tension (Z$_{33}$, Z$_{34}$).

## FIG 1

$A_{21}$  $R_2$  $V2$  $E$

$W2$

$U_{21}$  $U_2$  $U_S$

$Z_{21}$

$L$

$Z_L$  $W1$

$A_{22}$

$U_1$  $Z_1$  $A_{31}$

$W3$

$A_{32}$  $V1$

$TR$

$E_{30}$  $A_E$

$ES$

$U_3$  $E_{31}$  $U_E$

## FIG 2

$R_{21}$  $R_{20}$  $E$

$A_{21}$

$W2$  $U_{21}$  $U_S$

$V2$

$A_{22}$

$L$  $R_{22}$

$Z_L$  $R_K$

$W1$

$U_1$  $A_{31}$

$W3$  $V1$

$A_{32}$  $TR$

$U_3$

FIG 3

FIG 4

FIG 5

FIG 6